# EUROPEAN PATENT APPLICATION

(11) **EP 4 503 506 A1**
(43) Date of publication of application: **05.02.2025**
(21) Application number: 23774135.0
(22) Date of filing: 25.03.2023
(51) Int. Cl.: H04L 9/32, G06Q 50/10, H04L 67/1097, H04L 9/00, G06F 16/909, G06Q 50/18

(54) **METHOD FOR ISSUING NON-FUNGIBLE TOKEN**

(30) Priority: 25.03.2022 KR 20220037160
(71) Applicant: B-Square Lab Co., Ltd., Seoul 06021 (KR)
(72) Inventor: KIM, Minsuk, Seoul 06337 (KR); AHN, Kyehyuk, Bucheon-si, Gyeonggi-do 14581 (KR); KIM, Changbae, Seoul 06777 (KR)
(74) Representative: KASTEL Patentanwälte PartG mbB
(86) International application number: PCT/IB2023/052967
(87) International publication number: WO 2023/181011

(57) **Abstract**

The present disclosure discloses a method of minting a non-fungible token (NFT) that contains multimedia or document data as well as circumstantial information associated with the multimedia or document data. More specifically, the method includes steps of establishing a connection to at least one terminal and receiving data from the terminal, verifying the data received from the terminal and circumstantial information that is associated with the data, and issuing an NFT associated with the data and the circumstantial information.

## Description

### TECHNICAL FIELD

The present disclosure relates to a method of issuing a non-fungible token (NFT) that contains multimedia data or document data and circumstantial information associated therewith.

### BACKGROUND ART

Conventional NFT-issuance technologies issue NFTs only for multimedia or document data, making it easy to verify whether the data has been forged or altered after it was issued as an NFT. However, there is a problem in that it is impossible to determine what history the multimedia or document data had before being published as an NFT, when, where, and by whom it was first created, and whether it has value as a record of a particular event.

### SUMMARY

### Technical Problem

The present disclosure aims to solve the above-mentioned problems.

An object of the present disclosure includes issuing a non-fungible token (NFT) for multimedia data and/or document data, by including not only the multimedia data and/or the document data, but also information associated with the situation or with circumstances in which the data is created. Accordingly, NFTs that can guarantee not only whether the data has been lost or altered, but also whether the data has value as a reliable record of a particular event can be issued and registered.

Further, based on such reliability, individual NFTs for a particular event can be issued by grouping them into a group NFT, thereby enabling new added value to be produced.

### Technical Solution

In order to achieve the above objects, a method for issuing (herein interchangeably used with "minting") a non-fungible token (NFT) according to an exemplary embodiment of the present disclosure may include establishing a connection to at least one terminal and receiving data from the terminal; verifying the data received from the terminal and circumstantial information associated with the data; and issuing an NFT associated with the data and the circumstantial information.

In some embodiments, the method may further include requesting at least some of issued NFTs to be registered to a first network. The method may further include requesting at least some of NFTs that are registered to the first network to be registered to a second network. The step of requesting at least some of NFTs that are registered to the first network to be registered to a second network may be performed at least intermittently or periodically at regular intervals.

The first network may be a private network, and the second network may be a public network. The public network may be a blockchain network, and the private network may be a sidechain network.

The NFT may include both the data and the circumstantial information.

The NFT may include the circumstantial information and information associated with the data. In such embodiments, the NFT may be stored in a blockchain network, and the data may be stored in a separate public network. The separate public network may be a cloud server.

The information associated with the data may include a hash associated with the data. The information associated with the data may include a link to a location where the data is stored.

The circumstantial information may include one or more of GPS location information, time information, information about the terminal, and user information.

Further, the circumstantial information may include time information, and the step of verifying the data and the circumstantial information associated therewith may include verifying whether a time at which the data was received from the terminal is within a predetermined time range from a time contained in the time information.

The circumstantial information may include proof that a particular person was present when the data was generated. The proof that a particular person was present may be a digital signature received from the particular person.

In some embodiments, the method may further include a step of determining whether one or more predetermined criteria are satisfied by evaluating the verified circumstantial information. The predetermined criteria may be set prior to receiving the data from the terminal or after receiving the data from the terminal and completing the step of verifying the circumstantial information associated with the data.

The step of determining whether one or more predetermined criteria are satisfied may include determining whether the data is related to a particular incident.

In some embodiments, the method may further include a step of bundling a plurality of individual NFTs to issue them as a group NFT.

The group NFT may be issued by grouping the plurality of individual NFTs pre-generated in accordance with one or more predetermined criteria. The group NFT may be issued first, and then the plurality of individual NFTs may be subsequently linked to the group NFT. The plurality of individual NFTs may be linked sequentially in a predetermined order. The predetermined order may be a chronological order.

The terminal may include a camera device, and the data may include a still photo or a video acquired using the camera device. In such embodiments, the circumstantial information may include meta-data of the still photo or the video.

The terminal may include a smartphone.

### Advantageous Effects

By issuing a non-fungible token (NFT) containing not only multimedia data and/or other documentary data, but also containing information associated with the situation or circumstances in which the data was created, the present disclosure provides an advantage of enabling verification of not only whether the data has been lost or altered, but also whether the data has value as a reliable record of a particular incident. Further, based on such reliability, individual NFTs for a particular incident can be issued as a group NFT by grouping the individual NFTs, thereby enabling new added value to be created.

### BRIEF DESCRIPTION OF THE DRAWING

FIG. 1 shows an exemplary embodiment of an NFT according to the present disclosure, which contains multimedia data and information associated with the situation in which the multimedia data was created;
FIG. 2 shows an exemplary embodiment of a process of issuing an NFT and registering it on a blockchain network after receiving multimedia data and circumstantial information and then verifying them;
FIG. 3 shows an exemplary embodiment of a network structure that may be used to implement the present disclosure;
FIG. 4 shows an exemplary embodiment of a process of combining two or more NFTs to issue a group NFT and registering it in the blockchain network; and
FIGS. 5 to 7 show various data relationships between a group NFT and individual NFTs according to exemplary embodiments of the present disclosure.

### DETAILED DESCRIPTION

The detailed description of the present disclosure described below refers to the accompanying drawings, which show by way of specific exemplary embodiments in which the present disclosure may be practiced. These exemplary embodiments are described in sufficient detail to enable those skilled in the art to practice the disclosure. It should be understood that the various exemplary embodiments of the present disclosure that are different from one another are not necessarily mutually exclusive. For example, specific shapes, structures, and characteristics described herein with respect to one exemplary embodiment may be implemented in other embodiments without departing from the spirit and scope of the disclosure. Additionally, it should be understood that the location or arrangement of individual components within each disclosed exemplary embodiment may be changed without departing from the spirit and scope of the disclosure. Accordingly, the detailed description that follows is not intended to be taken in a limiting sense, and the scope of the disclosure is limited only by the appended claims and all equivalents thereof as properly described. Similar reference numerals in the drawings refer to identical or similar elements across various aspects.

Hereinbelow, in order to enable those skilled in the art to readily practice the present disclosure, exemplary embodiments of the present disclosure will be described in detail with reference to the attached drawings.

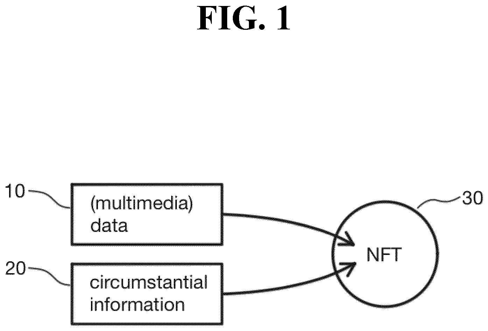

FIG. 1 shows an exemplary embodiment of an NFT that contains multimedia data and information associated with the situation in which the multimedia data was created. According to an exemplary embodiment of the present disclosure, multimedia or document data 10 may be created using at least one terminal. Herein, the data 10 may be constituted with one or more of photo data, video data, voice data, or any combination thereof. The data 10 may be composed of a document embedded with photos or videos. For example, the data 10 may include a photo or video of a particular event, a photo or video taken with a particular person (e.g., a celebrity, etc.), a photo or video taken using medical equipment, a photo or video taken by security equipment, a document containing contents of a contract and/or a photo or video of scene of contract execution, or a will. To this end, the terminal may be, for example, a device comprising a camera device, or a device capable of acquiring motion pictures, including a camera device and recording means. An example of such a terminal may be a smartphone. The data 10 may include still photos or videos taken using the camera device. In other embodiments, the terminal may include a document scanner, and the data 10 may include a scanned copy of a document obtained using the document scanner device. Unless specifically mentioned otherwise, the expression "multimedia information" or "multimedia data" in the drawings and the specification also includes document data or a combination of document and multimedia data.

Circumstantial information 20 may be generated in association with the data 10. The circumstantial information 20 may include one or more of GPS location information, time information, information associated with the terminal, or user information. In the above example of a camera device, meta-data of the still photo or video may be included. In addition, the circumstantial information 20 may include various contents or context associated with the related data 10. The circumstantial information 20 will be described in detail later below.

Conventional NFT minting technologies issue NFTs merely with respect to multimedia or document data. Therefore, while it may be readily verified whether the data has been forged or modified after being issued as an NFT, there is a problem in that it is impossible to ascertain in terms of what history the multimedia or document data underwent prior to being issued as an NFT, when, where, and by whom it has been first created, or whether it is worth being deemed as a record of a particular incident once it has been issued as an NFT. Conversely, the method for minting NFTs according to exemplary embodiments of the present disclosure issues an NFT 30 with respect to the circumstantial information 20 associated with the situation or circumstances in which the data 10 was produced as well as the multimedia and/or document data 10. Accordingly, it can be guaranteed that the data 10 issued as the NFT 30 bears value as a reliable record of a particular incident and that it has not been forged or altered between the initial creation and the time of NFT minting.

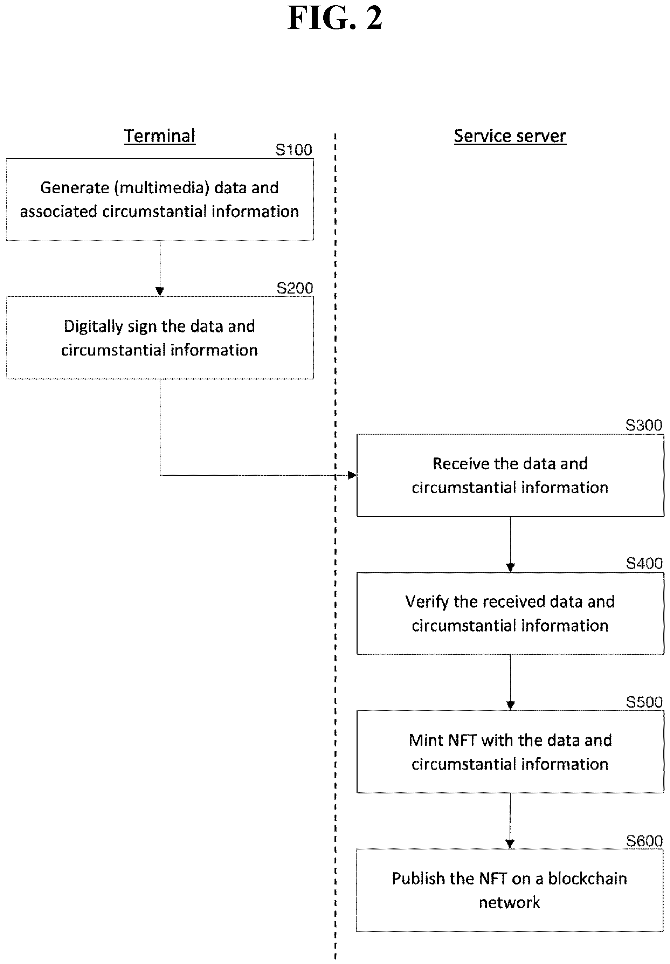

FIG. 2 shows an exemplary embodiment of a process for issuing an NFT and registering it on a blockchain network after receiving multimedia data and circumstantial information and then verifying the multimedia data and/or the circumstantial information. Referring to FIG. 2, according to a method for issuing an NFT according to an exemplary embodiment of the present disclosure, a user terminal may generate multimedia or document data and associated circumstantial information (S100); and a service providing server may establish a connection with at least one terminal and receive the multimedia or document data generated by the terminal and the circumstantial information associated therewith (S300). Subsequently, the service providing server may verify the multimedia or document data and the circumstantial information received from the terminal (S400). Based on the verification result, the service providing server may issue an NFT for the received multimedia or document data and the circumstantial information (S500).

According to an exemplary embodiment of the present disclosure, a step of attaching a digital signature of the terminal user to the multimedia data or document data (S200) may be further included. By attaching the digital signature, the user terminal may prove the creation and ownership of the data. As such, modification to the data by the owner or a third party may be prevented. Digital signatures may be based on various public key encryption methods, which are widely used in blockchain and in other technologies.

Further, at least some of the issued NFTs may be registered to a first network, and at least some of the NFTs registered to the first network may be subsequently registered to a second network (S600). The first network may be implemented as a private network, and the second network may be implemented as a public network. By way of example, a blockchain network may be used as the second network, and the first network may serve as a sidechain network of the blockchain network. The first network may function as a roll-up network. By utilizing the first network, the scalability of the network may be enhanced, and thus it may become easier to secure the processing performance of the second network.

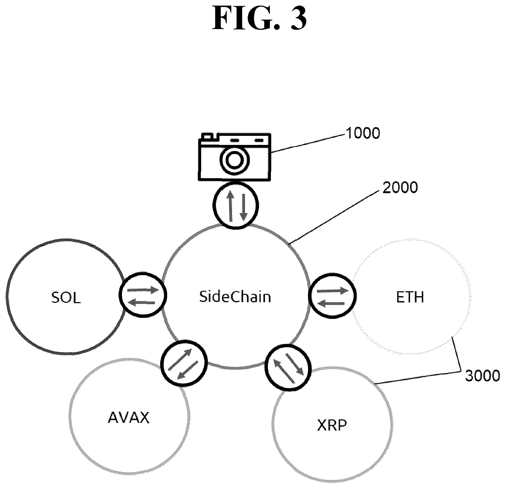

FIG. 3 shows an exemplary embodiment of a network structure that is capable of performing the method of the present disclosure. Referring to FIG. 3, a terminal 1000 may be connected to a first network 2000, and the first network 2000 may perform the role of a service providing server for the terminal 1000 and may function as a sidechain network for a second network 3000. As described above, the second network 3000 may include, for example, Ethereum (ETH), Ripple (XRP), Avalanche (AVAX), Solana (SOL), or the like. The present disclosure is not limited thereto, and a variety of conventional blockchain networks may be used.

By registering the minted NFT on the blockchain, since the NFT cannot be forged or altered, aspects such as the history of the included data prior to NFT issuance, proof of when, where, and by whom it was created, and whether it can be trusted as a record of a particular incident may be guaranteed by the service provider or an organization delegated or authorized by the service provider. After the NFT issuance, not only the core data but also the circumstantial information associated therewith may be maintained securely without risks of forgery or falsification.

In some embodiments, all of the NFTs registered in the first network may be registered in the blockchain (i.e., second network). In some other embodiments, the minted NFTs may be first registered on a private network (i.e., first network) such that they may be managed at the service server level to prevent the multimedia or document data from being forged or altered. Some of them may be selected and registered on the blockchain (i.e., second network). Accordingly, the cost and resources required to register the NFTs on the blockchain may be reduced. Selecting the NFTs to be registered on the blockchain may be done directly by the user who created the multimedia or document data, or it may be done on the service server side. Alternatively, it may be conducted by a third party.

Meanwhile, in order to prove that the NFTs stored in the first network are safely stored without forgery/tampering, information associated with part or all of the NFTs stored in the first network may be registered on the blockchain (i.e., second network). To this end, a list of NFTs stored in the first network, or a hash of each NFT, or a hash of all NFTs stored in the first network may be registered to the blockchain intermittently or at regular intervals. Alternatively or additionally, summary information associated with some or all of data stored in the first network may be registered in the blockchain (i.e., second network). For example, to prove that there is no forgery or alteration, the hash included in the block header of the first network may be summarized for each block or a predetermined number of blocks and may be stored in the blockchain within a predetermined time.

In some embodiments, an NFT may be issued in a format containing both the core (e.g., multimedia) data and the circumstantial information. In some other embodiments, multimedia data may be stored separately, and an NFT may be issued in a format containing the circumstantial information along with a pointer (e.g., uniform resource location (URL)) that can specify the location where the multimedia data is stored. Accordingly, the size of the NFT may be reduced, thereby allowing the costs and resources required to register and maintain the NFTs to be reduced. The NFTs may be registered on the blockchain network, and the multimedia data may be stored in a separate public network, for example, a cloud server. However, the present disclosure also includes configurations where the multimedia data remains in the user's terminal rather than in the public network.

In case the multimedia data is stored on a separate public network or user terminal, the NFTs stored in the blockchain may include a hash of the multimedia data such that, even though the multimedia data itself is not registered on the blockchain, it may be verified later whether the multimedia data has been forged/modified, by comparing the hash included in the NFT with the hash of the corresponding multimedia data stored in the separate public network or user terminal.

As described above, the circumstantial information included in the NFT may include GPS location information, time information, information associated with the terminal, user information, or the like. Further, the information associated with the terminal may include unique information of the user terminal. For example, an international mobile equipment identity (IMEI), a device ID, a device serial number, or the like may be used.

The service server may verify the multimedia or document data and the associated circumstantial information that are received from the user terminal. For example, it may be configured to verify that the time when the data was received from the terminal is within a predetermined time range from the time information contained in the circumstantial information. Accordingly, a condition may be set such that the generated multimedia or document data may be issued as an NFT only if it is transmitted to the service server within a predetermined time. Alternatively or additionally, by verifying the unique information of the user terminal, it may be verified whether the received multimedia or document data was transmitted from a subscriber of the service, or it may be determined who created the data. Alternatively or additionally, by comprehensively considering the unique information about the terminal, GPS location information, and time information, it may be verified whether the terminal generated the multimedia or document data while moving in a reasonable and/or normal pattern.

According to an exemplary embodiment of the present disclosure, the multimedia data may be created as a photo taken together with a particular person, and the associated circumstantial information may include a digital signature received from the particular person in the photo. For example, if persons A, B, and C appear in the photo, the service server may be configured to issue the circumstantial information as an NFT after verifying that the circumstantial information includes the digital signatures of all three persons A, B, and C.

According to an exemplary embodiment of the present disclosure, a group NFT may be issued by bundling two or more NFTs among the issued NFTs. For example, based on the circumstantial information included in the NFTs, only such NFTs related to a particular incident may be collected and issued as a new group NFT. To this end, the service server may further perform a step of evaluating the verified circumstantial information to determine whether one or more predetermined criteria are satisfied.

The predetermined standard may be set in advance before the service server receives data from the terminal, or it may be set after the service server receives data from the terminal and completing verification of the circumstantial information associated therewith.

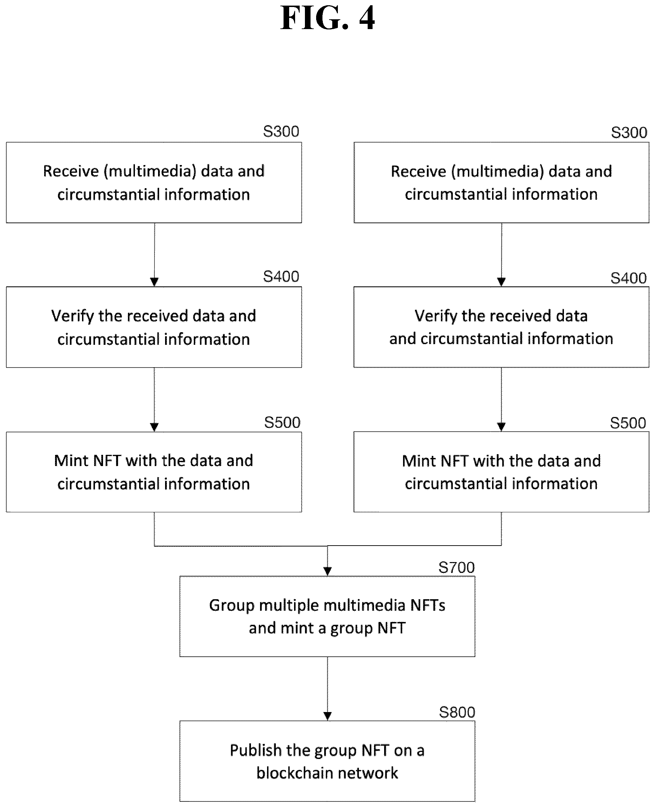

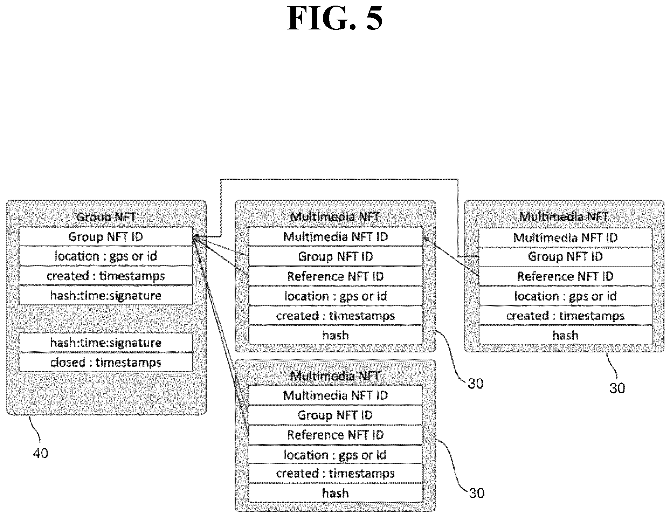

FIG. 4 shows an exemplary embodiment of a process of merging two or more NFTs to issue a group NFT and registering it in the blockchain network. FIGS. 5 to 7 show various data relationships between a group NFT and individual NFTs according to exemplary embodiments of the present disclosure.

Referring to FIG. 4, a method for issuing NFTs according to an exemplary embodiment of the present disclosure may further include minting a group NFT by grouping a plurality of individual NFTs (S700), and registering the issued group NFT to a private or public network, for example, a blockchain network (S800).

According to an exemplary embodiment shown in FIG. 5, after the group NFT 40 is first created, one or more individual NFTs 30 that satisfy predetermined criteria may be linked to the group NFT 40. For example, when a singer's concert schedule is set, one may create a group NFT for this concert, and the service users who attend the concert may transmit multimedia data they create to the service server. The service server may verify the multimedia data received from the users and the associated circumstantial information such as GPS location information, time information, and the like. In response to determining that the data is indeed relevant to the concert in question, the service server may issue individual NFTs for the multimedia data and the circumstantial information, and at this time, each individual NFT may be configured to include a reference to the group NFT. Accordingly, the group NFT may contain extensive data relevant to the concert, and the data is guaranteed to be a verified record of the concert.

The NFTs bundled in this way may be traded to someone else as a whole or a part, or they may also be reproduced as a second group NFT. As such, users who created and provided the individual NFTs may receive dividends therefor, and a person (or organization) having the ownership of the group NFT may create added value for collecting the individual NFTs and creating the group NFT.

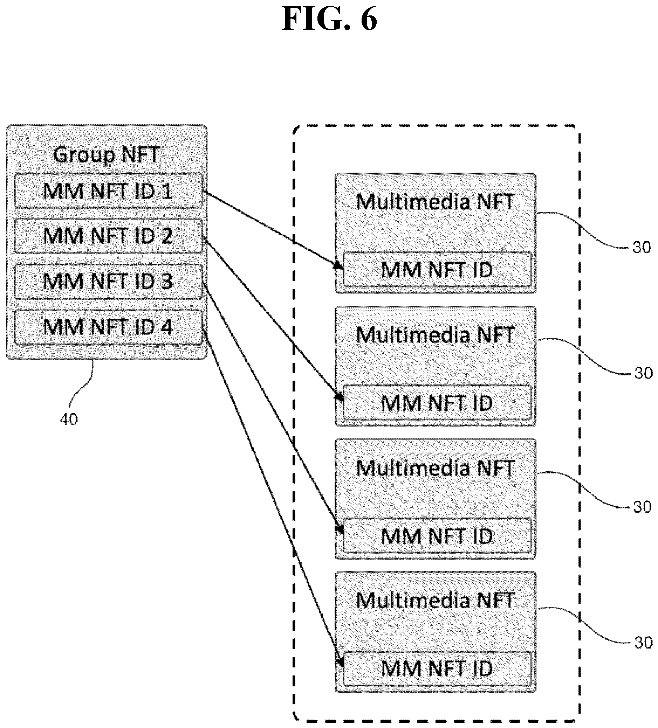

Referring to FIG. 6, in a situation where the individual NFTs 30 are first transmitted to the service server, if someone determines that there is a need to mint a group NFT 40 related to a particular event, at least some individual NFTs 30 may be bundled and issued as a group NFT 40. **In** such a case, the post-issued group NFT 40 may include a list of references to the individual NFTs 30 that it includes. However, the present disclosure is not limited thereto. Even if the group NFT is issued later, the individual NFTs may be modified and re-issued to include a reference to the group NFT to which they belong, so that they have the substantially same structure as the structure shown in FIG. 5.

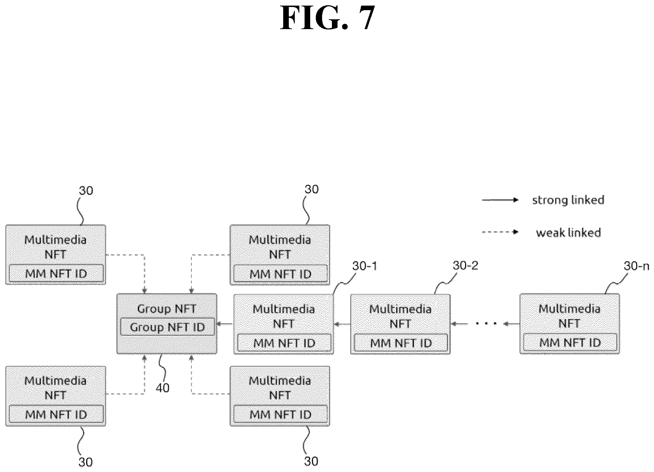

Referring to FIG. 7, individual NFTs 30 may be linked individually and in parallel to one group NFT 40, individual NFTs 30 may be sequentially linked in series toward one group NFT 40, or individual NFTs 30 may be linked to one group NFT by a combination of parallel and series. The expression that NFTs are linked sequentially or serially may mean that a first individual NFT 30-1 contains a reference to a higher-level group NFT 40, a second individual NFT 30-2 contains a reference to the first individual NFT 30-1, a third individual NFT is sequentially linked thereto to include a reference to the second individual NFT 30-2, and so forth. Under this configuration, if any intermediate individual NFT is lost later, it may become possible to determine that the reliability of the corresponding group NFT cannot be guaranteed.

For example, if a group NFT is minted for a thread of text messages exchanged with someone, each exchanged message may be created as an individual NFT by including a reference to the immediate previous message. As such, if someone later deletes or modifies any message in the thread, this fact will be easily revealed. Accordingly, by making the entire thread of conversation into a group NFT that includes sequential NFTs linked thereto, it may be possible to guarantee that the entire content of this conversation has not been edited or altered.

The user terminal, the service server, the nodes constituting the first network, and the nodes constituting the second network may be implemented using computer components including one or more processors and one or more memories. Operations, activities, and events performed by the user terminal, the service server, the nodes constituting the first network, and the nodes constituting the second network may be described by one or more program instructions that are stored in memory and executed by a processor.

Exemplary embodiments according to the present disclosure described above may be implemented in the form of program instructions that can be executed through various computer components such as a processor and recorded on a non-transitory computer-readable storage medium. The non-transitory computer-readable storage medium may include program instructions, data files, data structures, etc., singly or in combination. Program instructions recorded on the non-transitory computer-readable storage medium may be specially designed and configured for the present disclosure, or may be known and usable by those skilled in the computer software field. Examples of the non-transitory computer-readable storage media include magnetic media such as hard disks, floppy disks, and magnetic tapes, optical recording media such as CD-ROMs and DVDs, and magneto-optical media such as floptical disks, and hardware devices specifically configured to store and perform program instructions, such as ROM, RAM, flash memory, and the like. Examples of program instructions include not only machine language codes such as those created by a compiler, but also high-level language codes that can be executed by a computer using an interpreter, or the like. The hardware device may be configured to operate as one or more software modules to perform processing according to the present disclosure and vice versa.

In the foregoing, the present disclosure has been described with specific details such as specific components and exemplary embodiments and drawings, but this is only provided to facilitate a more general understanding of the present disclosure, and the present disclosure is not limited to the above-described exemplary embodiments. A person skilled in the art to which the present disclosure pertains can make various modifications and variations from the present disclosure.

Therefore, the spirit of the present disclosure should not be limited to the above-described exemplary embodiments, and the scope of the claims described below as well as all modifications equivalent to the scope of the claims fall within the scope of the spirit of the present disclosure.

## Claims

1. A method for issuing a non-fungible token (NFT), comprising:
establishing a connection with at least one terminal and receiving data from the terminal;
verifying the data received from the terminal and circumstantial information associated with the data; and
issuing an NFT associated with the data and the circumstantial information.

2. The method of claim 1, further comprising:
requesting at least some of issued NFTs to be registered to a first network.

3. The method of claim 2, further comprising:
requesting at least some of NFTs that are registered to the first network to be registered to a second network.

4. The method of claim 3, wherein said step of requesting at least some of NFTs that are registered to the first network to be registered to a second network is performed at least intermittently or periodically at regular intervals.

5. The method of claim 2, wherein the first network, as a service providing server, is configured to:
establish a connection with the at least one terminal and receive the data from the terminal;
verify the data received from the terminal and the circumstantial information associated with the data; and
issue the NFT associated with the data and the circumstantial information.

6. The method of claim 3, wherein the first network is a private network, and the second network is a public network.

7. The method of claim 6, wherein the public network is a blockchain network, and the private network is a sidechain network.

8. The method of claim 1, wherein the NFT comprises both the data and the circumstantial information.

9. The method of claim 1, wherein the NFT comprises the circumstantial information and information associated with the data.

10. The method of claim 9, wherein the NFT is stored in a blockchain network, and the data is stored in at least one of a separate public network or the terminal.

11. The method of claim 10, wherein the separate public network is a cloud server.

12. The method of claim 9, wherein the information associated with the data comprises a hash associated with the data.

13. The method of claim 9, wherein the information associated with the data comprises a link to a location where the data is stored.

14. The method of claim 1, wherein the circumstantial information comprises one or more of GPS location information, time information, information about the terminal, or user information.

15. The method of claim 1, wherein the circumstantial information comprises time information, and
wherein said step of verifying the data received from the terminal and circumstantial information associated with the data comprises verifying whether a time of receiving the data from the terminal is within a predetermined time range from a time contained in the time information.

16. The method of claim 1, wherein the circumstantial information comprises proof that a particular person was present when the data was generated.

17. The method of claim 16, wherein the proof that a particular person was present is a digital signature received from the particular person.

18. The method of claim 1, further comprising:
determining whether one or more predetermined criteria are satisfied by evaluating the verified circumstantial information.

19. The method of claim 18, wherein said step of determining whether one or more predetermined criteria are satisfied comprises determining whether the data is related to a particular incident.

20. The method of claim 1, further comprising:
bundling a plurality of individual NFTs to issue a group NFT.

21. The method of claim 20, wherein the group NFT is issued by grouping the plurality of individual NFTs generated in accordance with one or more predetermined criteria.

22. The method of claim 21, wherein the group NFT is issued, and the plurality of individual NFTs are subsequently linked to the group NFT.

23. The method of claim 21, wherein the plurality of individual NFTs are linked sequentially in a predetermined order.

24. The method of claim 23, wherein the predetermined order is a chronological order.

25. The method of claim 1, wherein the terminal comprises a camera device, and the data comprises a still photo or a video acquired using the camera device.

26. The method of claim 25, wherein the circumstantial information comprises meta-data of the still photo or the video.

27. The method of claim 1, wherein the terminal comprises a smartphone.
